Europäisches Patentamt

European Patent Office

Office européen des brevets

(19)

(11) Numéro de publication : **0 013 216**
**B1**

(12) **FASCICULE DE BREVET EUROPÉEN**

(45) Date de publication du fascicule du brevet :
**13.10.82**

(51) Int. Cl.³ : **G 21 C 17/04**

(21) Numéro de dépôt : **79401015.7**

(22) Date de dépôt : **13.12.79**

(54) **Dispositif de détection et de localisation des ruptures de gaine dans un réacteur nucléaire, notamment refroidi par métal liquide.**

(30) Priorité : **27.12.78 FR 7836482**

(43) Date de publication de la demande :
**09.07.80 (Bulletin 80/14)**

(45) Mention de la délivrance du brevet :
**13.10.82 Bulletin 82/41**

(84) Etats contractants désignés :
**BE DE GB IT NL**

(56) Documents cités :
**DE A 2 537 393**
**DE A 2 818 782**
**FR A 1 531 997**
**FR A 2 105 072**
**FR A 2 128 167**
**FR A 2 147 948**
**FR A 2 373 788**
**GB A 900 308**
**GB A 949 108**
**GB A 1 376 060**
**US A 3 178 355**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Rulleau, Alain**
**8, Quartier Saint Roch**
**F-84120 Pertuis (FR)**

(74) Mandataire : **Mongrédien, André et al**
**c/o Brevatome 25, rue de Ponthieu**
**F-75008 Paris (FR)**

Imprimerie Jouve, 18, rue St-Denis, 75001 Paris, France

## Dispositif de détection et de localisation des ruptures de gaine dans un réacteur nucléaire, notamment refroidi par métal liquide

La sécurité des réacteurs nucléaires exige d'une façon générale que tout incident et tout particulièrement toute rupture de gaine se produisant dans un assemblage combustible soit immédiatement décelé et localisé de façon à permettre d'éliminer le ou les assemblages défaillants le plus rapidement possible.

D'une façon générale, il est connu d'effectuer la surveillance des ruptures de gaines éventuelles des éléments combustibles d'un réacteur nucléaire en recherchant l'apparition de produits de fission radioactifs au sein du fluide réfrigérant dans lequel baignent les éléments combustibles. Comme l'enseigne par exemple le brevet français FR-A-1 531 997 on effectue cette surveillance successivement de deux façons différentes. Une première détection globale (chambre 11 de ce brevet français) est faite sur l'ensemble du fluide réfrigérant ayant traversé le cœur et une seconde détection unitaire (chambre de repérage 12) est faite séquentiellement sur le fluide qui a traversé chaque élément combustible. Un système de pompes et de vannes permet d'admettre successivement dans les chambres 11 et 12 les échantillons de fluide correspondants.

Dans les réacteurs nucléaires à neutrons rapides refroidis par métal liquide, on sait que le combustible est réparti sous forme d'assemblages autonomes comportant chacun un grand nombre d'aiguilles à l'extérieur desquelles circule le métal liquide fondu constituant le réfrigérant du cœur. Dans les réacteurs de ce type conçus jusqu'à ce jour, on a généralement détecté et surveillé l'apparition de ruptures de gaines éventuelles à l'aide de compteurs de neutrons, par exemple à trifluorure de bore $BF_3$, chargés de mettre en évidence la présence dans le métal liquide de neutrons retardés émis par des produits de fission de courte période tels que l'iode ou le brome radioactifs. La détection d'une rupture existant dans l'ensemble des assemblages du cœur est faite en examinant en permanence l'ensemble du métal liquide circulant dans le cœur, par exemple au niveau des échangeurs primaires : la localisation ultérieure d'une telle rupture nécessite un examen séquentiel de chacun des assemblages du cœur, ce pour quoi un tuyau de prélèvement de métal liquide est prévu au droit de chaque assemblage pour acheminer l'échantillon correspondant jusqu'à un appareil de mesure. Cette dernière fonction est généralement confiée à un module de localisation de ruptures de gaines (LRG) implanté dans le couvercle du cœur du réacteur.

Une réalisation de ce genre a fait l'objet du brevet français FR-A-2 105 072 pour « Dispositif de localisation d'une rupture de gaine d'assemblage combustible dans un réacteur nucléaire » au nom du Commissariat à l'Energie Atomique du 22 septembre 1970. Dans cette réalisation, mise au point pour le réacteur français Phénix, un module LRG a la charge des 120 assemblages du cœur pour lesquels il assure trois fonctions, à savoir : la surveillance globale de l'activité du sodium traversant lesdits assemblages, une première localisation de rupture de gaine éventuelle par groupe de trois assemblages, puis enfin, une deuxième localisation individuelle de l'assemblage responsable d'une rupture. Ce résultat est obtenu à l'aide d'un module de localisation de ruptures de gaines comportant essentiellement un boîtier suspendu dans le bouchon tournant du cœur du réacteur et fermé à sa partie inférieure par une plaque de répartition des tubes de prélèvement en provenance des 120 assemblages pris en charge, ainsi qu'un système de deux sélecteurs rotatifs montés sur un arbre tournant dans l'axe de l'appareil, chargé de conduire séquentiellement le sodium prélevé à un appareil de mesure d'un genre en soi connu.

Le système des sélecteurs du module permet d'obtenir successivement 121 positions distinctes possibles, correspondant chacune à l'arrivée d'un tube de prélèvement de sodium dans la plaque de répartition. Les 120 premiers tubes proviennent chacun d'un assemblage différent et le 121e tube provient de la chambre de mélange du module lui-même, c'est-à-dire qu'il véhicule un échantillon de sodium provenant du mélange de tous les courants de sodium qui ont traversé les 120 assemblages.

Lorsque les sélecteurs transmettent à l'appareil de mesure le sodium provenant du 121e tube de prélèvement précédent, on vérifie ainsi la totalité du fluide prélevé dans l'ensemble des 120 assemblages pour détecter la présence d'une rupture de gaine éventuelle et l'on effectue la surveillance globale des assemblages pris en charge par le module.

Lorsque les sélecteurs transmettent séquentiellement à l'appareil de mesure le sodium provenant soit de groupes de trois assemblages, soit d'assemblages unitaires sélectionnés parmi les 120 dont le module a la charge, on réalise la fonction de localisation de la (ou des) rupture(s) de gaines existantes.

Un tel dispositif qui fonctionne de façon satisfaisante, présente néanmoins l'inconvénient suivant : le fonctionnement séquentiel du module LRG implique que les trois fonctions réalisées ne peuvent jamais l'être de façon simultanée. Autrement dit, le module réalise, soit une détection globale, soit une localisation par groupe de trois, soit une localisation individuelle. Il en résulte, par exemple, une perte d'informations concernant la détection globale lorsque le module travaille en localisation par groupe de trois ou en localisation individuelle, et inversement.

Pour pallier cet inconvénient, on a pensé dans des réalisations existantes, tel que par exemple le réacteur britannique PFR, à utiliser parallèlement deux circuits de sodium dans un bouchon LRG du réacteur. Le premier de ces circuits est utilisé pour la fonction de détection globale et le second pour les fonctions de localisation par sous-groupes ou unitaire. Une telle solution, théoriquement satisfaisante, est toutefois d'un emploi difficile dès lors que le réacteur atteint une certaine taille. En effet, il devient alors nécessaire d'implanter plusieurs modules LRG, chacun étant chargé de la surveillance d'un secteur du cœur du réacteur. On se heurte alors en pratique à des difficultés dues à l'encombrement et à la complexité de ces modules.

C'est la raison pour laquelle, pour les futurs réacteurs de la filière française du type SUPER-PHENIX, dans lesquels le nombre d'assemblages du cœur est pratiquement le triple de celui du réacteur PHENIX, il a fallu concevoir un dispositif nouveau pour la détection et la surveillance des ruptures de gaines.

La présente invention a précisément pour objet un dispositif de détection globale et de localisation de rupture de gaines dans les assemblages combustibles du cœur d'un réacteur nucléaire qui tout en étant de conception plus simple et d'un encombrement moindre que celui de l'art antérieur précédemment rappelé, permet d'effectuer simultanément les fonctions de détection globale et de localisation de telles ruptures.

Le dispositif selon l'invention, utilisé dans un réacteur nucléaire, notamment refroidi par métal liquide, dont le cœur est divisé en secteurs adjacents comprenant une juxtaposition d'assemblages parcourus chacun par un écoulement de métal liquide est du genre de ceux qui utilisent un type de module de détection globale et de localisation des ruptures de gaines comportant, dans une boîte de mélange (19) dans le fond de laquelle débouchent n canaux de prélèvement (14) de fluide de refroidissement en provenance de n assemblages du cœur et un canal (26) en provenance de ladite boîte de mélange, un sélecteur (20) permettant de mettre successivement en communication l'un des $(n + 1)$ canaux précédents avec un système de détection de produits de fission ; il est caractérisé en ce qu'il comprend au moins deux modules $m_1$ et $m_2$ de détection globale et de localisation reliés respectivement à $n_1$ et $n_2$ canaux distincts, la somme $n_1 + n_2$ correspondant à l'ensemble des canaux d'un secteur donné, et en ce que les boîtes de mélange desdits modules $m_1$ et $m_2$ sont interconnectées.

Avantageusement, dans le cas où le dispositif comprend deux modules, les nombres $n_1$ et $n_2$ sont égaux. Le dispositif selon l'invention utilise comme on le voit des modules de localisation de ruptures de gaine (LRG) qui sont d'une conception plus simple que ceux de l'art antérieur, puisqu'ils consistent essentiellement en un boîtier possédant toujours une plaque inférieure de répartition dans laquelle pénètrent les tuyaux en provenance des prélèvements de n assemblages combustibles (n étant égal à $n_1$ ou à $n_2$), mais ils ne comportent plus en revanche qu'un seul sélecteur rotatif à $(n + 1)$ positions. Les n premières positions correspondent à chacun des tuyaux de prélèvement précédents, et la $(n + 1)^e$ position correspond au prélèvement du métal liquide global provenant des n assemblages précédents, contenu dans la boîte de mélange de l'appareil. La caractéristique essentielle du dispositif objet de l'invention réside dans la répartition des assemblages d'un même secteur entre au moins deux modules voisins et dans l'interconnexion que l'on réalise entre ces modules. Ceci permet d'une part d'effectuer une surveillance globale de l'état des gaines comportant, dans la majorité des cas de fonctionnement du réacteur, une duplication de cette surveillance, ce qui renforce la sécurité de l'installation, et d'autre part, dans le cas où la surveillance globale ci-dessus a révélé l'apparition d'au moins une rupture de gaine, de spécialiser les modules interconnectés dans l'une des fonctions de détection globale ou de surveillance unitaire et par conséquent de réaliser celles-ci simultanément.

On peut concevoir, dans le cadre de la présente invention, un grand nombre de combinaisons possibles dans l'association d'au moins deux modules de localisation LRG.

Dans un premier mode de mise en œuvre, les sélecteurs de deux modules LRG $m_1$ et $m_2$ sont placés de façon telle que lesdits modules soient affectés parallèlement à la détection globale des ruptures de gaines dans l'ensemble des $(n_1 + n_2)$ canaux.

Un tel mode de fonctionnement permet sans modification aucune de l'appareillage de surveillance de détection des ruptures de gaines, d'effectuer, en marche normale du réacteur, la détection globale simultanément sur deux appareils montés en parallèle, c'est-à-dire pratiquement de doubler la sécurité avec laquelle cette détection est effectuée.

En cas d'apparition d'au moins une rupture de gaine la fonction LRG est alors réalisée de la façon suivante : on affecte l'un des deux modules, par exemple le module $m_1$, à la localisation des ruptures de gaines successivement parmi les $n_1$ assemblages dudit module $m_1$ tandis que simultanément le sélecteur du module $m_2$ affecte ledit module $m_2$ à la détection globale des ruptures de gaines de l'ensemble des assemblages $(n_1 + n_2)$.

Si cette localisation ne permet pas de déceler une rupture dans les $n_1$ assemblages, on effectue ensuite l'opération inverse, c'est-à-dire que l'on affecte le module $m_2$ à la localisation des ruptures de gaine parmi les $n_2$ assemblages et le module $m_1$ à la détection globale des ruptures de gaine sur l'ensemble des $(n_1 + n_2)$ assemblages.

Il est ainsi possible de réaliser simultanément une détection globale permanente sur l'ensemble des $(n_1 + n_2)$ assemblages et la localisation unitaire parmi, soit les $n_1$, soit dans les $n_2$ assemblages.

Dans d'autres modes de mise en œuvre également intéressants de la présente invention, le dispositif se caractérise en ce que l'on associe au moins trois modules $m_1$, $m_2$ et $m_3$ de localisation dont les boîtes de mélange sont interconnectées. Dans un tel mode de groupement, lesdits modules peuvent fonctionner d'une manière analogue, à savoir en détection globale sur la totalité des assemblages correspondants ou en localisation sur les assemblages reliés à chaque module considéré. Une variante intéressante de ce mode d'association de ces modules trois par trois consiste à affecter en permanence l'un d'entre eux uniquement à la détection globale, ce module étant alors d'une réalisation très simplifiée, car il est dépourvu de sélecteur et de connexion avec les assemblages. Les deux autres modules assurent les fonctions de détection globale et de localisation unitaire parmi les $n_1$ et les $n_2$ assemblages.

De toute façon, l'invention sera mieux comprise en se référant à la lecture qui suit d'un certain nombre d'exemples de mise en œuvre qui sont donnés à titre illustratif et non limitatif en liaison avec les figures 1 à 4 ci-jointes sur lesquelles :

la figure 1 est une vue schématique en coupe d'une installation de surveillance de ruptures de gaines montée sur un réacteur nucléaire du type à neutrons rapides refroidi par métal liquide ;

la figure 2 est une vue schématique en coupe de deux modules LRG de localisation de ruptures de gaines, interconnectés selon l'invention ;

la figure 3 représente le détail de constitution du sélecteur rotatif inférieur des modules LRG de la figure 2 ;

la figure 4 représente un mode d'association particulier de trois modules LRG entre eux.

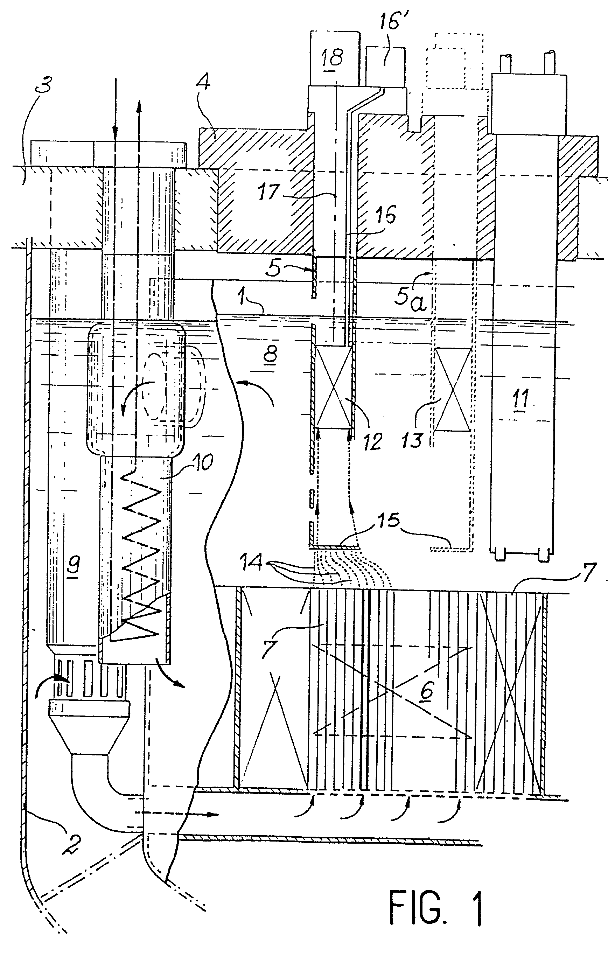

Sur la figure 1, on a représenté schématiquement en coupe les éléments essentiels connus d'un réacteur nucléaire du type à neutrons rapides, refroidi par métal liquide, en général du sodium. Ce métal 8 dont le niveau est visible en 1 est contenu dans une cuve 2 fermée à sa partie supérieure par une dalle de béton 3 dans laquelle peuvent tourner un certain nombre de bouchons tels que 4. Le cœur 6 proprement dit du réacteur est constitué d'un certain nombre d'assemblages verticaux parallèles, tels que 7. Le cœur 6 est parcouru par un courant de métal fondu 8 mis en circulation par des pompes immergées telles que 9. Chaque pompe 9 est associée à au moins un échangeur de chaleur 10. Les flèches représentent sur la figure 1 le sens de circulation du sodium liquide. On a également indiqué schématiquement en 11 une machine de chargement et de déchargement des assemblages 7. Sur la figure 1, on a représenté deux modules LRG, selon l'invention, de détection et de localisation de ruptures de gaines 12 et 13. Ces modules sont amovibles et comportent un boîtier 5 ou 5a qui traverse le bouchon tournant 4 sur lequel il repose ; l'extrémité inférieure du boîtier plonge dans le sodium au-dessus du cœur 6. Ces boîtiers reçoivent à leur base les différents tubes de prélèvement 14 de sodium liquide en provenance d'un certain nombre d'assemblages 7. Ces tubes 14 traversent une plaque de répartition 15 située à la base de chaque module 12 et 13 et sont associés à un système de sélecteurs rotatifs, non représenté sur la figure, qui permet de prélever et d'envoyer dans la canalisation 16 jusqu'à un appareil de mesure 16' le sodium provenant soit de l'ensemble des différents tubes de prélèvement 14, soit séquentiellement de chacun d'entre eux pris unitairement. Cette commande du système de sélecteurs intervient à l'aide d'un arbre rotatif 17 commandé par un moteur pneumatique pas à pas 18 situé au-dessus du bouchon 4.

Ainsi qu'il a été précédemment rappelé, les dispositifs de détection et de localisation de ruptures de gaines LRG mis en œuvre jusqu'à ce jour, sont relativement complexes et comportent deux sélecteurs par module sans permettre pour autant d'effectuer simultanément en permanence les opérations de détection globale et de surveillance unitaire ou par sous-groupes d'assemblages.

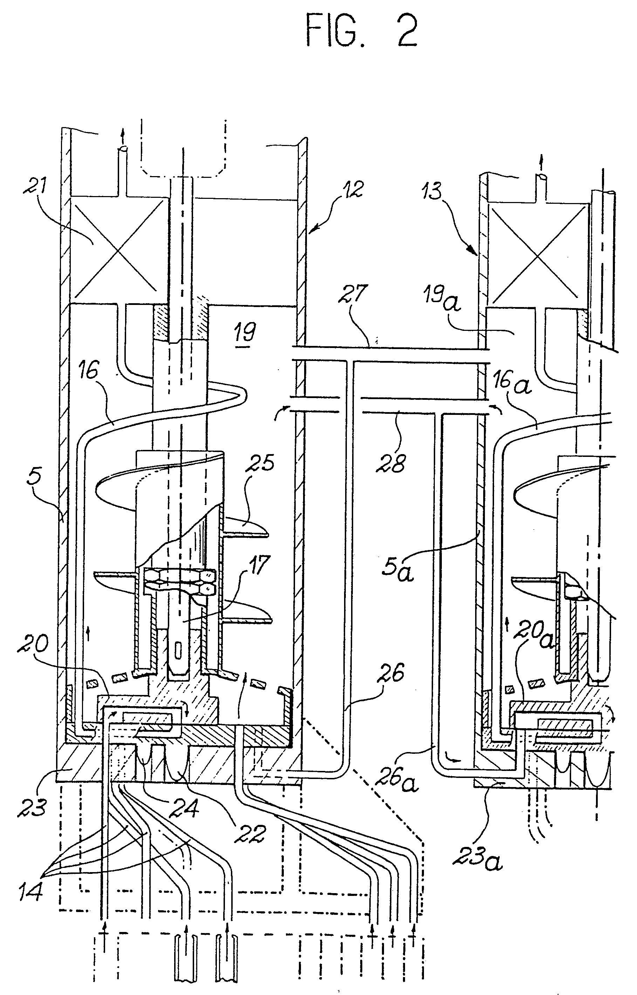

Le dispositif représenté plus en détail sur la figure 2, permet au contraire, avec un matériel de conception plus simple et grâce à la mise en œuvre de la présente invention, d'augmenter considérablement la fiabilité de l'installation.

Sur cette figure 2, on retrouve deux modules LRG de détection et de localisation de ruptures de gaines voisins 12 et 13, comportant chacun à leur base un certain nombre d'arrivées de tubes de prélèvement 14 qui débouchent directement dans la boîte de mélange 19 délimitée par le boîtier 5 du module 12 lui-même. A l'intérieur du boîtier 12 se trouve, de façon classique, le sélecteur 20, son arbre de commande 17 relié au moteur extérieur 18 (voir fig. 1), ainsi qu'une pompe 21 destinée à aspirer le sodium dans la canalisation 16 pour l'envoyer ensuite vers l'appareil de mesure 16'. L'ensemble du mécanisme est centré dans le boîtier 5 à l'aide du pivot de centrage 22 et orienté par rapport à la plaque de base 23 par le doigt de positionnement 24. Un certain nombre de chicanes 25, éventuellement en forme de plaque hélicoïdale, sont prévues dans la boîte de mélange 19 pour assurer le mélange homogène du sodium sortant des orifices de la plaque de base 23 en provenance des diverses canalisations 14. Si le module de détection et de localisation 12 surveille n assemblages du cœur, n tuyaux de prélèvement 14 parviennent à son extrémité inférieure et pénètrent dans la plaque de répartition 23. Une $(n + 1)^e$ arrivée 26 qui pénètre également par la partie inférieure de la plaque de répartition 23 est raccordée directement au contenu de la boîte de mélange 19 du module 12 et permet par conséquent au sélecteur 20 de prélever un échantillon de sodium correspondant à l'ensemble de ce métal liquide ayant traversé les n assemblages considérés. Le sélecteur 20 est monté rotatif autour de l'arbre 17 et possède $(n + 1)$ positions. Dans chacune des n premières positions, il met successivement selon une séquence déterminée à l'avance chacune des n canalisations 14 en communication avec la canalisation 16 pour envoyer des échantillons de sodium prélevés successivement dans chaque assemblage vers le dispositif de mesure 16', dans la $(n + 1)^e$ position, il met en communication la canalisation 26 avec la canalisation 16, permettant ainsi l'envoi vers le dispositif de mesure du sodium résultant du mélange des écoulements de ce métal ayant traversé les n assemblages. On comprend dès lors aisément que cette dernière position corresponde à la recherche globale d'une éventuelle rupture de gaine parmi les n assemblages sous le contrôle du module 12, et que chacune des n autres positions corresponde à l'examen de chaque assemblage pris séparément l'un après l'autre, c'est-à-dire à la fonction de localisation exacte de l'assemblage défectueux.

Le deuxième module 13 est absolument identique au premier module 12 et comporte les mêmes éléments, bien que pour des raisons de simplicité ceci n'ait pas été représenté intégralement sur le dessin. On a simplement représenté les canalisations 16a et 26a qui sont les homologues des canalisations 16 et 26 du module 12. Le sélecteur 20a est simplement esquissé en partie.

Le dispositif conforme à l'invention se caractérise essentiellement par l'association des modules 12 et 13 au moyen des conduits 27 et 28 d'interconnexion entre les boîtes de mélange 19 et 19a des modules 12 et 13. Dans ces conditions, si le module 12 a la charge de surveiller $n_1$ assemblages du cœur et si le module 13 a la charge de surveiller $n_2$ assemblages de ce même cœur, $n_1$ et $n_2$ correspondant avantageusement à des nombres égaux d'assemblages distincts, on voit que, grâce à l'interconnexion 27, 28 entre les modules 12 et 13, chacun d'entre eux effectue, lorsque son sélecteur correspondant 20 ou 20a est en position de détection globale, la même détection globale des ruptures éventuelles parmi les $(n_1 + n_2)$ assemblages du cœur. Cette association en combinaison par deux modules de LRG permet de réaliser trois combinaisons très intéressantes pour le fonctionnement d'un système global de surveillance des ruptures de gaines.

Dans un premier mode de fonctionnement d'une telle association, les deux sélecteurs 20 et 20a sont positionnés pour prélever le sodium des canalisations 26 et 26a provenant par conséquent de l'ensemble des $(n_1 + n_2)$ assemblages globalement surveillés. On réalise ainsi une surveillance générale du secteur considéré du cœur du réacteur, ce qui est suffisant en fonctionnement normal tant qu'aucune anomalie n'y est décelée ; ceci offre le gros avantage de faire réaliser de façon simple cette surveillance en parallèle et simultanément par deux appareils différents, ce qui conduit à doubler la sécurité.

Lorsqu'un défaut ayant été signalé dans un secteur du cœur, on veut procéder à une localisation unitaire, on a alors le choix entre deux autres modes de fonctionnement :

a) On peut laisser par exemple le sélecteur 20 du module 12 sur sa position de détection générale et mettre le sélecteur 20a du module 13 en position de balayage séquentiel unitaire des $n_2$ assemblages concernés par ce dernier module 13. On réalise ainsi alors et de façon simultanée sans cesser la surveillance permanente de l'ensemble du secteur considéré, la détection globale des ruptures de gaines par le module LRG 12 sur les $(n_1 + n_2)$ assemblages et la localisation unitaire des ruptures de gaines éventuelles parmi les $n_2$ assemblages sous le contrôle du module 13.

b) On peut également choisir la situation symétrique dans le cas où cette première prospection unitaire n'a donné aucun résultat. Dans ce cas, on place le sélecteur 20a du module 13 dans la position de détection ou de surveillance globale et l'on met en route le sélecteur 20 selon un programme d'exploration séquentielle unitaire des tubes 14 en provenance des $n_1$ assemblages du cœur.

Dans un cas comme dans l'autre, on voit que l'on réalise effectivement simultanément les deux fonctions de détection et de localisation des ruptures de gaines dans l'ensemble des $(n_1 + n_2)$ assemblages.

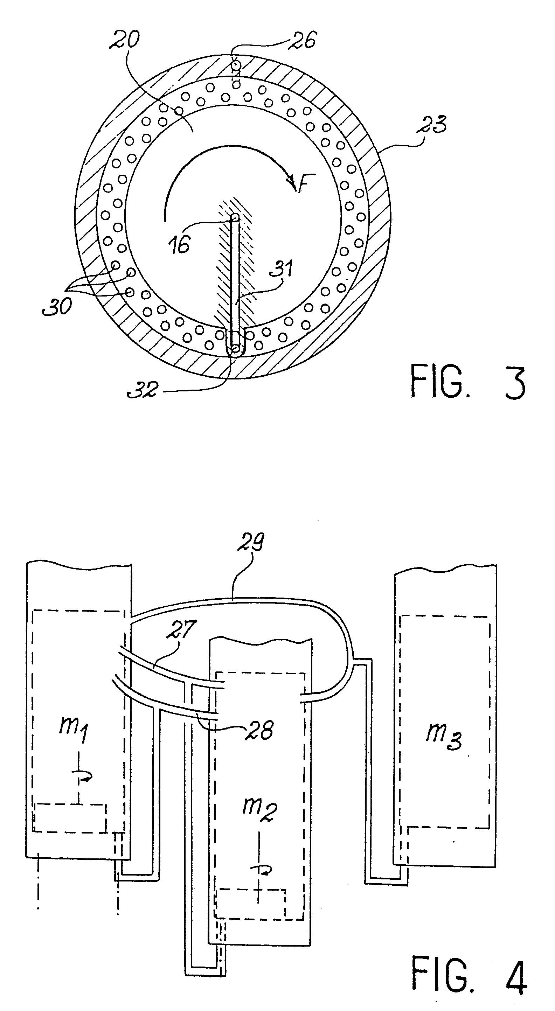

Sur la figure 3, on a décrit à titre d'exemple, un mode possible de réalisation de l'un des sélecteurs 20 des modules LRG. Dans ce mode de réalisation montré en coupe horizontale au niveau du sélecteur lui-même, on voit la plaque de base 23 dans laquelle débouche un certain nombre d'orifices tels que 30 en communication avec les tubes de prélèvement 14. Autour de l'axe du système est susceptible de tourner un suceur rotatif 31 pouvant venir en communication successivement avec chacun des orifices 30 de la façon suivante. Les orifices 30 sont répartis sur deux couronnes circulaires avec un décalage azimutal d'une rangée à l'autre. Grâce à son orifice allongé 32, le suceur 31 prélève dans chaque position le sodium en provenance d'une rangée puis dans la position immédiatement voisine le sodium provenant de l'orifice voisin de l'autre rangée, puisque deux orifices voisins ne sont jamais alignés sur le même rayon de la circonférence.

Pour le module déterminé, les orifices 30 sont au nombre de $(n + 1)$ correspondant par conséquent à chacun des assemblages reliés plus l'orifice de prélèvement du sodium provenant à la fois de la boîte de mélange du module concerné et de la boîte de mélange du module associé. La flèche F montre le sens de rotation autour de son axe du suceur 31 sous l'impulsion du moteur 18 de commande pas à pas.

Pratiquement, la mise en œuvre d'un système global de surveillance des ruptures de gaines selon le dispositif objet de l'invention conduit à diviser les assemblages combustibles du cœur en un certain nombre de secteurs, chacun d'entre eux étant affecté à un groupe de module LRG du type précédemment décrit. Les avantages d'une telle disposition par rapport à l'art antérieur sont évidents puisque à l'aide de réalisations plus simples (un sélecteur par module LRG au lieu de deux) d'un moindre encombrement, et sans prévoir de matériel supplémentaire, telles que des pompes en particulier, on obtient simultanément les fonctions de surveillance globale et de localisation unitaire. En outre, on a vu précédemment qu'en fonctionnement normal du réacteur, la redondance des informations conduisait à une amélioration sensible de la sécurité, ce qui permet en particulier d'envisager la suppression du système de détection générale surveillant le sodium prélevé dans la zone d'alimentation des échangeurs de chaleur.

Enfin, il est intéressant de noter que dans certains cas particuliers, on peut envisager selon l'invention, le groupement des modules LRG par groupes de plus de deux, par exemple par groupes de trois. A titre d'illustration de cette possibilité, on décrira maintenant en se référant à la figure 4 un exemple de ce genre où trois modules $m_1$, $m_2$ et $m_3$ sont groupés et interconnectés par des liaisons 27, 28 et 29.

On supposera comme dans ce qui précède que le module $m_1$ contrôle $n_1$ assemblages du cœur et que le module $m_2$ contrôle $n_2$ assemblages. Dans le schéma de la figure 4, le module $m_3$ qui ne possède ni connexion avec les assemblages, ni sélecteur est en permanence réglé sur la position de détection globale. Les modules $m_1$ et $m_2$ peuvent fonctionner, soit en détection globale si aucune rupture de gaine n'est signalée, soit en localisation dans le cas contraire. On obtient ainsi un dispositif qui permet d'obtenir au prix d'un troisième module LRG dont la conception est particulièrement simplifiée, simultanément soit plusieurs détections globales (ce qui augmente la sécurité) soit une détection globale et deux localisations unitaires sur les $n_1$ et $n_2$ assemblages. On peut encore avantageusement envisager un groupement du genre ci-dessus, c'est-à-dire comprenant un module simplifié analogue à $m_3$ affecté en permanence à la détection globale et placé au centre d'un cercle sur lequel on dispose une pluralité de modules, analogues à $m_1$ ou $m_2$, et pouvant fonctionner en détection ou en localisation, ces modules $m_1$, $m_2$, etc... étant connectés au module central par des liaisons radiales.

Bien entendu, l'invention ne se limite pas aux différents modes de mise en œuvre qui viennent d'être décrits et il est évident que bien d'autres associations d'interconnexions des modules LRG entre eux peuvent être envisagées selon les problèmes particuliers que l'on souhaite résoudre dans un réacteur nucléaire donné. Enfin, il est bien évident que pour un réacteur de petite taille, le cœur peut ne comprendre qu'un secteur unique et que dans ce cas tous les assemblages du cœur sont surveillés par le même groupe de modules.

**Revendications**

1. Dispositif de détection globale et de localisation de ruptures de gaines dans les assemblages combustibles du cœur d'un réacteur nucléaire, notamment refroidi par métal liquide, ledit cœur divisé en secteurs adjacents comprenant une juxtaposition d'assemblages parcourus chacun par un écoulement de métal liquide, du genre de ceux qui utilisent un type de module de détection globale et de localisation des ruptures de gaines comportant, dans une boîte de mélange (19) dans le fond de laquelle débouchent n canaux de prélèvement (14) de fluide de refroidissement en provenance de n assemblages (7) du cœur et un canal (26) en provenance de ladite boîte de mélange, un sélecteur (20) permettant de mettre successivement en communication l'un des (n + 1) canaux précédents avec un système de détection de produits de fission, caractérisé en ce qu'il comprend au moins deux modules $m_1$ et $m_2$ de détection globale et de localisation reliés respectivement à $n_1$ et $n_2$ canaux distincts, la somme $n_1 + n_2$ correspondant à l'ensemble des canaux d'un secteur donné, et en ce que les boîtes de mélange desdits modules $m_1$ et $m_2$ sont interconnectées.

2. Dispositif de détection globale et de localisation de ruptures de gaines selon la revendication 1, caractérisé en ce que les sélecteurs (20, 20a) de deux modules $m_1$ et $m_2$ sont placés de façon telle que lesdits modules soient affectés parallèlement à la détection globale des ruptures de gaines dans l'ensemble des $(n_1 + n_2)$ canaux.

3. Dispositif de détection globale et de localisation de ruptures de gaines selon la revendication 1, caractérisé en ce que la commande des sélecteurs des deux modules $m_1$ et $m_2$ affecte le module $m_1$ à la localisation des ruptures de gaines successivement parmi les $n_1$ assemblages dudit module $m_1$ tandis que simultanément, le sélecteur (20a) du module $m_2$ affecte ledit module $m_2$ à la détection globale des ruptures de gaines de l'ensemble des assemblages $(n_1 + n_2)$.

4. Dispositif de détection globale et de localisation de ruptures de gaines selon la revendication 1, caractérisé en ce que la commande des sélecteurs des deux modules $m_1$ et $m_2$ affecte le module $m_1$ à la détection globale des ruptures de gaines de l'ensemble des assemblages $(n_1 + n_2)$ tandis que simultanément, le sélecteur (20a) du module $m_2$ affecte celui-ci à la localisation des ruptures de gaines successivement parmi les $n_2$ assemblages du module $m_2$.

5. Dispositif de détection globale et de localisation de ruptures de gaines selon la revendication 1, caractérisé en ce que les boîtes de mélange d'au moins trois modules ($m_1$, $m_2$, $m_3$) sont interconnectées, lesdits modules fonctionnant soit en détection globale sur la totalité des assemblages correspondants, soit en localisation sur les assemblages reliés à chaque module considéré.

6. Dispositif de détection globale et de localisation de ruptures de gaines selon la revendication 1, caractérisé en ce que les boîtes de mélange d'au moins trois modules sont interconnectées, un module, dépourvu de sélecteur et de connexions avec des assemblages, fonctionnant uniquement en détection globale sur les assemblages reliés aux autres modules, ceux-ci pouvant fonctionner, soit en détection globale, soit en localisation sur les assemblages reliés à chaque module considéré.

## Claims

1. Apparatus for overall detection and localization of leaks in the jackets of fuel elements in the core of a nuclear reactor, especially a liquid-cooled reactor, said core being divided into sectors, comprising a group of assemblies, each traversed by a flow of liquid metal, of the type employing an overall leak detection and localization module comprising a mixing compartment at whose bottom open n sampling conduits for cooling fluid associated with n core assemblies, and a single conduit fed by the said mixing compartment, with a selector enabling each of said (n + 1) conduits to be placed successively in communication with a detector system for fission products, characterized in that it comprises at least two overall detection and localization modules $m_1$ and $m_2$ respectively associated with $n_1$ and $n_2$ separate conduits, the total $n_1 + n_2$ corresponding to the total of conduits of a given sector, and in that the mixing compartments of the said modules $m_1$ and $m_2$ are interconnected.

2. Apparatus for overall detection and localization of jacket leaks according to Claim 1, characterized in that the selectors of the two modules $m_1$ and $m_2$ are assigned in parallel to the overall detection of leaks in the totality of $(n_1 + n_2)$ conduits.

3. Apparatus for overall detection and localization of jacket leaks according to Claim 1 characterized in that the selector control of the two modules $m_1$ and $m_2$ assigns module $m_1$ to the successive localization of leaks among the $n_1$ assemblies of the said module $m_1$ while simultaneously the selector of module $m_2$ assigns said module $m_2$ to the overall detection of leaks in the totality of assemblies $(n_1 + n_2)$.

4. Apparatus for overall detection and localization of jacket leaks according to Claim 1 characterized in that the selector control of the two modules $m_1$ and $m_2$ assigns module $m_1$ to the overall detection of leaks in the totality of assemblies $(n_1 + n_2)$ while simultaneously the selector of module $m_2$ assigns it to the successive localization of jacket leaks among the $n_2$ assemblies of module $m_2$.

5. Apparatus for overall detection and localization of jacket leaks according to Claim 1 characterized in that the mixing compartments of at least three modules are interconnected, said modules acting either for overall detection on the totality of associated assemblies or each respective module acting for localization on its associated assemblies.

6. Apparatus for overall detection and localization of jacket leaks according to Claim 1 characterized in that the mixing compartments of at least three modules are interconnected one module, having no selector or connection with assemblies, and acting solely for overall detection on the assemblies associated with the other modules, which may themselves act either for overall detection or for localization on assemblies associated with each respective module.

## Ansprüche

1. Vorrichtung zur Gesamtfeststellung und Lokalisierung von Brüchen der Rohrwandungen in Kernbrennstoffanordnungen des Reaktorkernes von Kernreaktoren, insbesondere von durch flüssiges Metall gekühlten, wobei der Reaktorkern in benachbarte Abschnitte unterteilt ist, die eine Nebeneinanderordnung von Kernbrennstoffanordnungen aufweisen, von denen jede von einer Strömung flüssigen Metalls durchströmbar ist und wobei die Vorrichtung von der Art ist, die eine Einheit zur Gesamtfeststellung und zum Lokalisieren von Rohrwandungsbrüchen verwendet, die eine Mischkammer, in deren Boden n Entnahmekanäle für das von n Anordnungen des Kernes herkommenden Kühlmittels und ein von der Mischkammer herkommender Kanal münden, und eine Wähleinrichtung aufweist, mit der aufeinanderfolgend einer der (n + 1) vorgenannten Kanäle mit einem Feststellsystem für Spaltprodukte in Verbindung bringbar ist, dadurch gekennzeichnet, daß die Vorrichtung mindestens zwei Einheiten $m_1$ und $m_2$ zur Gesamtfeststellung und Lokalisierung aufweist, die jeweils mit $n_1$ bzw. $n_2$ getrennten Kanälen verbunden sind, wobei die Summe $n_1 + n_2$ der Gesamtheit der Kanäle einem gegebenen Abschnitt entspricht, und daß die Mischkammern der Einheiten $m_1$ und $m_2$ miteinander verbunden sind.

2. Vorrichtung nach Anspruch 1, dadurch gekennzeichnet, daß die Wähleinrichtungen der zwei Einheiten $m_1$ und $m_2$ derart angeordnet sind, daß die Einheiten parallel zur Gesamtfeststellung von Rohrwandungsbrüchen bei der Gesamtheit der $(n_1 + n_2)$ Kanäle verwendbar sind.

3. Vorrichtung nach Anspruch 1, dadurch gekennzeichnet, daß die Steuerung der Wähleinrichtungen der zwei Einheiten $m_1$ und $m_2$ bei der Einheit $m_1$ die aufeinanderfolgende Lokalisierung von Brüchen der Rohrwandungen bei den $n_1$ Anordnungen der Einheit $m_1$ bewirkt, während gleichzeitig die Wähleinrichtung der Einheit $m_2$ bei der Einheit $m_2$ die Gesamtfeststellung von Rohrwandungsbrüchen der Gesamtheit der Anordnungen $(n_1 + n_2)$ bewirkt.

4. Vorrichtung nach Anspruch 1, dadurch gekennzeichnet, daß die Steuerung der Wähleinrichtungen der zwei Einheiten $m_1$ und $m_2$ bei der Einheit $m_1$ die Gesamtfeststellung von Rohrwandungsbrüchen bei der Gesamtheit von Anordnungen $(n_1 + n_2)$ bewirkt, während gleichzeitig die Wähleinrichtung der Einheit $m_2$ bei dieser die aufeinanderfolgende Lokalisierung von Brüchen der Rohrwandungen bei den $n_2$ Anordnungen der Einheit $m_2$ bewirkt.

5. Vorrichtung nach Anspruch 1, dadurch gekennzeichnet, daß die Mischkammern von mindestens drei Einheiten miteinander verbunden sind, wobei die Einheiten entweder zur Gesamtfeststellung der Gesamtheit von entsprechenden Anordnungen oder zur Lokalisierung bei den mit jeder betreffenden Einheit verbundenen Anordnungen arbeitet.

6. Vorrichtung nach Anspruch 1, dadurch gekennzeichnet, daß die Mischkammern von mindestens drei Einheiten miteinander verbunden sind, wobei eine Einheit, welche ohne Wähleinrichtung und ohne Verbindungen mit den Anordnungen ausgebildet ist, nur zur Gesamtfeststellung bei den mit den anderen Einheiten verbundenen Anordnungen arbeitet, wobei diese entweder zur Gesamtfeststellung oder zur Lokalisierung der mit jeder der betreffenden Einheit verbundenen Anordnung arbeiten.

FIG. 1

FIG. 2

0 013 216

2

FIG. 3

FIG. 4